# EUROPÄISCHE PATENTSCHRIFT

(11) **EP 3 275 952 B1**
(45) Veröffentlichungstag und Bekanntmachung des Hinweises auf die Patenterteilung: **30.01.2019**
(21) Anmeldenummer: 16180947.0
(22) Anmeldetag: 25.07.2016
(51) Int. Cl.: C09D 125/00

(54) **WÄSSRIGE BESCHICHTUNGSMASSE**
AQUEOUS COATING MATERIAL
MASSE DE REVETEMENT EN BASE AQUEUSE

(43) Veröffentlichungstag der Anmeldung: 31.01.2018
(73) Patentinhaber: DAW SE, 64372 Ober-Ramstadt (DE)
(72) Erfinder: Befurt, Uwe, 64372 Ober-Ramstadt (DE); Becker, Daniel, 64367 Mühltal (DE); Brenner, Thomas, 64367 Mühltal (DE)
(74) Vertreter: Metten, Karl-Heinz

(56) Entgegenhaltungen:
- WO-A1-2011/051034
- CN-A- 104 446 311
- DE-A1-102005 010 967
- DE-C1- 19 735 431
- US-A1- 2006 156 948

## Beschreibung

Die vorliegende Erfindung betrifft eine wässrige Lasur-Beschichtungsmasse. Ferner betrifft die Erfindung ein Beschichtungssystem, insbesondere Lasurbeschichtungssystem, enthaltend oder gebildet aus mindestens einer erfindungsgemäßen Beschichtungsmasse und mindestens einer wässrigen Farbtonpaste. Außerdem betrifft die Erfindung eine Beschichtung, insbesondere Lasur-Beschichtung, erhalten oder erhältlich aus einer erfindungsgemäßen Beschichtungsmasse oder aus einem erfindungsgemäßen Beschichtungssystem. Auch betrifft die Erfindung ein Substrat enthaltend eine beschichtbare Oberfläche und auf dieser beschichtbaren Oberfläche eine erfindungsgemäße Beschichtung. Darüber hinaus betrifft die Erfindung ein Kit-of-Parts für ein erfindungsgemäßes Beschichtungssystem. Schließlich betrifft Erfindung die Verwendung der erfindungsgemäßen Beschichtungsmasse oder des erfindungsgemäßen Beschichtungssystems oder des erfindungsgemäßen Kit-of-Parts für die, insbesondere lasierende, Beschichtung von Substratoberflächen.

Lasierende Beschichtungen im Innenbereich erfreuen sich wachsender Beliebtheit. Beschichtungen für den Innenbereich, beispielsweise für den Küchen- und Wohnbereich haben vielfältige Anforderungen zu erfüllen. Beispielsweise haben Beschichtungen für den Innenbereich regelmäßig raumlufthygienisch unbedenklich zu sein. Darüber hinaus wird einerseits Schimmelresistenz gefordert, andererseits sollen moderne Innenraumbeschichtungen ohne Konservierungsmittel auskommen. Ein besonderes Manko vieler Innenraumbeschichtungen ist dessen geringe oder gar fehlende Reinigungsfähigkeit. Um den Bedürfnissen eines Breiten Kundenkreises gerecht zu werden, haben Innenraumbeschichtungen überdies im Allgemeinen gut abtönbar zu sein.

Die CN 104 446 311 A offenbart eine Beschichtung auf Wasserbasis mit Wasserglas und einem Muschelprotein als Bindemittel. Darüber hinaus ist Titandioxidpulver enthalten.

Die WO 2011/051034 A1 betrifft ein 1-Komponenten-Beschichtungssystem enthaltend einen Kern-Schale-Partikel, wobei dieses (Meth)acrylate enthält, der Kern-Schale-Partikel kugelförmig ist und eine Partikelgröße von mindestens 100 µm und maximal 3 mm aufweist, die Schale aus einem anorganischen Material besteht und der Kern eine Reaktivkomponente enthält.

Die DE 10 2005 010967 A1 offenbart eine wässrige Lackzusammensetzung für die Beschichtung von Gegenständen aus Holz im Wesentlichen enthaltend A) 20 bis 95 Gew.-% mindestens eines wässrigen Bindemittels, und B) 5 bis 80 Gew.-% eines hydrophilierten Keton/Aldehyd-Harzes und/oder eines hydrophilierten, hydrierten Keton/Aldehyd-Harzes, und C) 0 bis 75 Gew.-% mindestens eines Zusatzstoffes, wobei die Summe der Gewichtsangaben von Komponente A) bis C) 100 Gew.-% beträgt.

Die US 2006/156948 A1 offenbart ein im wesentlichen farbstabiles antimikrobielles Beschichtungssystem, umfassend eine Beschichtungszusammensetzung und ein anorganisches antimikrobielles Mittel, wobei das antimikrobielle Mittel etwa 0,1 Gew.-% bis etwa 25 Gew.-% Silberionen und 0,1 Gew. % bis etwa 25 Gew .-% Kupferionen, bezogen auf das Gewicht des antimikrobiellen Mittels, umfasst und wobei das Gewichtsverhältnis der Silberionen zu den Kupferionen etwa 1:10 bis etwa 10: 1 beträgt.

Die DE 197 35 431 C1 offenbart ein wässriges Nachbehandlungsmittel für feuchten Beton mit einem Gemisch aus wässriger weichmacherfreier Butylacrylat-Copolymer-Dispersion, Wasserglaslösung, Entschäumer, Thixotropiermittel, mikronisiertem Polyethylenwachs und Wasser.

Die DE 10 2012 215 459 A1 offenbart einen Baustoff zur Beschichtung von Gebäuden oder Baumaterialien, umfassend thermochrome Farbstoffe sowie Latentwärmespeicher.

Die WO 2005/118726 A1 betrifft eine Zusammensetzung zum Beschichten von Wänden, Fassaden oder dergleichen. Die erfindungsgemäße Zusammensetzung enthält mindestens ein Bindemittel, das eine Absorption von weniger als 0,8 bei einer Absorptionswellenlänge im Bereich zwischen 380 und 500 nm aufweist, und mindestens eine photokatalytisch aktive Substanz, die eine Extinktion von mehr als 0,005 bei der Absorptionswellenlänge aufweist.

Die DE 101 44 187 A1 betrifft ein Konservierungsmittel für Beschichtungszusammensetzungen, welches eine oder mehrere, quartäre Ammoniumverbindungen und ein oder mehrere Alkalisierungsmittel, ausgewählt aus Alkalimetallhydroxid, -carbonat, -hydrogencarbonat und -silikat, Erdalkalioxid, -hydroxid, hydrogencarbonat und -silikat und Al(OH)₃ umfasst.

Die DE 103 05 749 A1 betrifft silikatgebundene Materialien wie Beschichtungs-, Form-, Klebe- und Spachtelmaterialien unter Verwendung eines silikatischen Bindemittels, wobei das Silikatbindemittel wasserlösliches Silikat, Kieselsäure und eine oder mehrere wasserlösliche organische Stickstoffverbindungen als Stabilisator enthält. Auf diese Weise sollen Anstrichmittel mit unterschiedlichen Eigenschaften für den Einsatz im Innenbereich bereitgestellt werden können, die einen größtmöglichen Schutz für Mensch und Umwelt bieten, für Allergiker geeignet sind, und gleichzeitig eine hohe Lagerstabilität ohne Eigenschaftsveränderungen aufweisen. Außerdem soll sich das Anstrichmittel gemäß DE 103 05 749 A1 auf Wasserbasis mit einem hautfreundlichen pH-Wert formulieren lassen, und zwar ohne dass zusätzliche Sicherungs- bzw. Schutzmaßnahmen erforderlich sind.

Es wäre nur wünschenswert, solche Versuche-Beschichtungen verwenden zu können, die nicht mit den Nachteilen des Stands der Technik behaftet sind. Daher lag der vorliegenden Erfindung die Aufgabe zu Grunde, Lasur-Beschichtungen verfügbar zu machen, die für den Koch- und Wohnbereich geeignet sind, sich gut abtönen lassen und gereinigt werden können, insbesondere auch von hartnäckigen, aggressiven Rückständen, ohne dass Spuren verbleiben.

Demgemäß wurde eine transparente wässrige Lasur-Beschichtungsmasse gefunden, enthaltend oder bestehend aus
a) mindestens einem polymeren organischen Bindemittel auf Dispersionsbasis,
b) Wasserglas,
c) mindestens einem die Lagerfähigkeit der wässrigen Lasur-Beschichtungsmasse steigernden Stabilisator, insbesondere umfassend oder bestehend aus mindestens einer wasserlöslichen organischen Stickstoffverbindung,
d) mindestens einem Dispergiermittel und/oder mindestens einem Netzmittel, insbesondere mindestens einem Dispergiermittel,
e) mindestens einem Wachs, insbesondere zugegeben in Form einer wässrigen Wachsemulsion, und
f) mindestens einem Additiv.

Die erfindungsgemäßen wässrigen Lasur-Beschichtungsmassen können auch als Wasserenthaltende Lasur-Beschichtungsmassen oder als Lasur-Beschichtungsmassen auf Wasserbasis bezeichnet werden. Die erfindungsgemäße wässrige Beschichtungsmasse liegt regelmäßig in Form einer wässrigen Dispersion vor.

Grundsätzlich kommen als polymere organische Bindemittel auf Dispersionsbasis alle Bindemittel in Betracht, die üblicherweise in Kunststoffdispersionsfarben eingesetzt werden. Exemplarisch seien als geeignete polymere organische Bindemittel auf Dispersionsbasis Vinylacetat/Ethylen-Copolymere, Copolymere auf Basis von Vinylaromaten, insbesondere Styrol, und Acrylaten oder auf Basis von Reinacrylaten. Polymere organische Bindemittel auf Basis von Copolymeren aus Vinylaromaten und Acrylaten und insbesondere aus Styrol und Acrylaten sind vorliegend besonders bevorzugt. Reinacrylate umfassen Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbausteine. Das polymere organische Bindemittel wird in einer zweckmäßigen Ausgestaltung in Form einer wässrigen Bindemitteldispersion eingesetzt. Demgemäß kommen als polymere organische Bindemittel insbesondere auch solche in Frage, bei denen die in Wasser dispergierten oder dispergierbaren Polymere aus gleichen oder verschiedenen Monomeren gebildet sind, wobei mindestens eines der Monomere ein Acrylsäureester, Methacrylsäurester, Acrylsäure, Methacrylsäure, Vinylacetat, Vinylchlorid, Versatat, Acrylitril oder eine vinylaromatische Verbindung darstellt. In einer zweckmäßigen Ausgestaltung basiert das in Wasser dispergierte oder dispergierbare Polymer dabei auf i) Acrylsäureestern und Vinylaromaten, insbesondere Styrol, oder auf ii) Acrylsäureestern und Vinylestern mindestens einer Koch-Säure, insbesondere der Versatinsäure, und gegebenenfalls Vinylaromaten, insbesondere Styrol. Geeignete Acrylatbindemittel verfügen in einer zweckmäßigen Ausgestaltung über eine Molmasse im Bereich von 300.000 g/mol und darüber. Besonders geeignete polymere organische Bindemittel weisen eine Mindestfilmbildetemperatur (MFT-Wert), bestimmt gemäß ISO 2115:1996 (Ausgabedatum: 2001-04), kleiner oder gleich 10, insbesondere kleiner oder gleich 7 und besonders bevorzugt kleiner gleich 5 auf. Der Trockengewichtsanteil der polymeren organischen Bindemittel kann grundsätzlich in weiten Bereichen variieren. Solche erfindungsgemäßen Beschichtungszusammensetzungen sind bevorzugt, bei denen der Trockengewichtsanteil an organischem Bindemittel, bezogen auf das Gesamtgewicht, im Bereich von 5 bis 35 Gew.%, vorzugsweise 10 bis 30 Gew.% und besonders bevorzugt 12 bis 25 Gew. % liegt.

Grundsätzlich kommen als Wassergläser Natrium-, Kalium- und Lithiumwasserglas sowie deren Mischungen in Betracht. Bevorzugt wird für die erfindungsgemäßen Beschichtungszusammensetzungen auf Kaliumwasserglas zurückgegriffen. Bei Wasserglas handelt es sich z.B. um Reaktionsprodukte aus Alkalikarbonaten bzw. -hydroxiden mit Quarzsand. Diese werden kommerziell häufig in Form wässriger Lösungen angeboten. In diesen kommerziell erhältlichen wässrigen Lösungen liegt das Wasserglas im Allgemeinen mit einem 22 Gew.-%-igen Feststoffanteil vor. Wasserglas kann alternativ grundsätzlich auch in Pulverform eingesetzt werden.

Ferner sind unter den erfindungsgemäßen Beschichtungszusammensetzungen auch diejenigen besonders geeignet, bei denen der Trockengewichtsanteil an Wasserglas, bezogen auf das Gesamtgewicht der Beschichtungszusammensetzung, im Bereich von 0,1 bis 3,5 Gewichtsprozent, vorzugsweise im Bereich von 0,3 bis 2,4 Gewichtsprozent und besonders bevorzugt im Bereich von 0,6 bis 1,8 Gewichtsprozent liegt.

In einer besonders zweckmäßigen Ausführungsform verfügen die erfindungsgemäßen Beschichtungsmasse über solche wasserlöslichen organischen Stickstoffverbindungen, die ausgewählt sind aus der Gruppe bestehend aus Verbindungen mit einer, zwei oder mehr Ammoniumgruppen, insbesondere quartären Ammoniumgruppen, Alkylendiamintetracarboxylsäure, insbesondere Ethylendiamintetraessigsäure, Salzen der Alkylendiamintetracarboxylsäure, insbesondere Salzen der Ethylendiamintetraessigsäure, Alkylendiamintetracarboxlat, insbesondere Ethylendiamintetraacetat, alkoxyliertes, insbesondere propoxyliertes, Tetraalkylalkylendiamin, insbesondere Tetraalkylethylendiamin, Tetrahydroxyalkylalkylendiamin, insbesondere N,N,N',N'-Tetrakis-(2-hydroxypropyl)-ethylendiamin, alkoxyliertem, insbesondere ethoxyliertem oder propoxyliertem, (N,N')-Tetraalkylalkylendiamin, insbesondere (N,N')-Tetraalkylethylendiamin, und beliebigen Mischungen hiervon.

Bei den Ammoniumgruppen kann es sich z.B. um protonierte Amine, beispielsweise um protonierte Mono-, Di- oder Trialkylamine handeln. Bevorzugt wird auf quartäre Ammoniumgruppen zurückgegriffen. Bei quartären Ammoniumgruppen sind alle vier Valenzen des Stickstoffatoms organisch gebunden. Unter den wasserlöslichen organischen Stickstoffverbindungen enthaltend quartäre Ammoniumgruppen sind wiederum solche bevorzugt, die über zwei quartäre Ammoniumgruppen verfügen, bevorzugt über eine Alkyleneinheit, beispielsweise eine Ethyleneinheit, miteinander verbunden. Bei den organischen Resten der quartäre Ammoniumverbindungen kann in einer Ausführungsform auf aliphatische Kohlenwasserstoffeinheiten mit 1 bis 20, vorzugsweise 2 bis 10 Kohlenstoffatomen oder auf aromatische Einheiten, beispielsweise Phenyl, zurückgegriffen werden.

Geeignete Dispergiermittel umfassen zum Beispiel polyanionische Dispergiermittel. Diese können zweckmäßigerweise ausgewählt sein aus der Gruppe bestehend aus Polycarboxylaten, insbesondere Salze von Polyacrylsäuren, Polyphosphaten, insbesondere lineare Polyphosphate und/oder zyklische Metaphosphate, und beliebigen Mischungen hiervon. Bevorzugt wird auf die Salze von Polyacrylsäuren zurückgegriffen. Als Dispergiermittel werden regelmäßig solche Substanzen bezeichnet, die die festen partikulären Bestandteile, insbesondere Pigmente, in einer noch nicht ausgehärteten Beschichtungszusammensetzung in der Schwebe halten und eine Agglomeration dieser Teilchen, auch als Flokkulation bekannt, verhindern bzw. zurückdrängen. In Abgrenzung von Netzmitteln, bei denen es sich regelmäßig um niedrigmolekulare, amphiphile Substanzen handelt, umfassen Dispergiermittel im Allgemeinen gegen Flokkulation stabilisierende oligomere und polymere Verbindungen. Geeignete Netzmittel können demgemäß niedrigmolekulare, d.h. nicht-oligomere und nicht polymere Tenside umfassen, beispielsweise Fettalkoholsulfate oder Alkylphosphonate. Bevorzugt enthalten die erfindungsgemäßen Beschichtungsmassen das mindestens eine Dispergiermittel. Besonders geeignete sind diese erfindungsgemäßen Beschichtungsmassen im Wesentlichen frei von Netzmitteln.

Unter geeignete Wachse im Sinne der vorliegenden Erfindung sollen solche natürlichen, halbsynthetischen und synthetischen organischen Verbindungen verstanden werden, die bei 20°C noch knetbar sind und die oberhalb von 40°C ohne Zersetzung zu schmelzen beginnen, d.h. in einen niedrigviskosen, schmelzflüssigen Zustand übergehen. Geeignete Wachse umfassen z.B. synthetische Wachse wie Bienenwachs, Carnaubawachs und/oder Paraffinwachse, und synthetische Wachse wie Polyalkylenwachse, insbesondere Polyethylen- und Polypropylenwachse, Polyamidewachse, und/oder oxidierte Polyalkylenwachse, oder deren Mischungen. Als geeignete Wachse seien ausdrücklich auch genannt sogenannte Esterwachse, das heißt Ester aus langkettigen, linearen Carbonsäuren und ein- oder mehrwertigen Alkoholen, Montanwachse, mikrokristalline Wachse, Wachsalkohole, Candelillawachs, Ozokerit-Wachs und beliebigen Michungen hiervon.

Vorzugsweise beträgt die Menge des Wachses (Feststoffanteil) 0,01 bis 3,0 Gew.%, bezogen auf das Gesamtgewicht der Beschichtungsmasse, bevorzugt 0,03 bis 2,0 Gew.%, besonders bevorzugt 0,1 bis 1,5 Gew.% und insbesondere 0,3 bis 1,0 Gew.-%.

Besonders geeignete erfindungsgemäße Lasur-Beschichtungsmassen verfügen ferner über mindestens ein Mattierungsmittel (Komponente g)). Zufriedenstellende Resultate erhält man dabei insbesondere mit solchen Mattierungsmitteln, die ausgewählt sind aus der Gruppe bestehend aus Kieselsäure, insbesondere Fällungskieselsäure, Aluminiumnatriumsalzen, Diatomene, Kaolin und beliebigen Mischungen hiervon. Die der Erfindung zugrunde liegende Aufgabe wird aber besonders gut bei Einsatz von amorpher Fällungskieselsäure gelöst.

Besonders geeignete erfindungsgemäße Lasur-Beschichtungsmassen verfügen ferner über mindestens einen Füllstoff und/oder mindestens ein Pigment (Komponente h)). Geeignete Füllstoffe umfassen dabei zum Beispiel Tonminerale; Talk; Glimmer; calcitische Füllstoffe, insbesondere Carbonate wie Calciumcarbonate, Dolomite, Calcite und/oder Aragonite; silikatische Füllstoffe, insbesondere Quarzite, Schichtsilikate, Feldspate und/oder Vulkanite; Bariumsulfat; Aluminiumhydroxid; Kalk oder beliebige Gemische hiervon.

Als geeignete Pigmente seien exemplarisch anorganische Pigmente wie Bunt-, Schwarz- und Weißpigmente (Farbpigmente) sowie Glanzpigmente und organische Pigmente wie Bunt- und Schwarzpigmente genannt. Als geeignete anorganische Weißpigmente kommen zum Beispiel Titandioxid, Zinkweiß, Farbenzinkoxid; Zinksulfid und/oder Lithopone in Betracht. Unter den anorganischen Schwarzpigmenten kann zum Beispiel ausgewählt werden unter Eisenoxidschwarz, Eisen-Mangan-Schwarz, Spinellschwarz und/oder Ruß. Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cadmiumsulfoselenid, Cersulfid, Molybdatrot, Ultramarinrot, Eisenoxidbraun, Mischbraun, Spinell- und Korundphasen, Chromtitangelb, Chromorange, Cersulfid, Eisenoxidgelb, Nickeltitangelb, Chromtitangelb, Spinellphasen, Cadmiumsulfid, Cadmiumzinksulfid, Chromgelb und/oder Bismutvanadat.

In den erfindungsgemäßen Lasur-Beschichtungsmassen liegen Mattierungsmittel, Füllstoffe und Pigmente in einer vorteilhaften Ausgestaltung in einer Gesamtmenge nicht oberhalb von 20 Gew.%, vorzugsweise nicht oberhalb von 15 Gew.% und besonders bevorzugt nicht oberhalb von 10 Gew.%, bezogen auf das Gesamtgewicht der Beschichtungsmasse, vor.

Besonders geeignete erfindungsgemäße Lasur-Beschichtungsmassen verfügen ferner über Kieselsol (Komponente i)). Geeignete Kieselsole sind dem Fachmann bekannt. Kieselsole sind im Handel in Form wässriger kolloidaler Suspensionen von Polykieselsäuremolekülen erhältlich. Das in wässrigen Systemen vorliegende Kieselsol ist vorzugsweise alkalisch und hat besonders bevorzugt einen pH-Wert größer 9. Die mittlere Partikelgröße des besonders geeigneten Kieselsols liegt üblicherweise bei 80 nm oder darunter und ist bevorzugt kleiner oder gleich 40 nm und insbesondere bevorzugt kleiner oder gleich 20 nm. Ganz besonders bevorzugt ist die mittlere Partikelgröße des Kieselsols kleiner oder gleich 10 nm.

Besonders geeignete erfindungsgemäße Lasur-Beschichtungsmassen verfügen ferner über mindestens ein Hydrophobierungsmittel (Komponente j)). Bevorzugte Hydrophobierungsmittel können dabei ausgewählt werden aus der Gruppe bestehend aus Alkylakoxysilanen, Alkylalkoxysiloxanen, wasserlöslichen Alkysilikonaten, Monoalkylsilantriol, Dialkylsilandiol, Trialkylsilanol, den Alkalisalzen von Monoalkylsilantriol, Dialkylsilandiol undTrialkylsilanol, und beliebigen Mischungen hiervon. Unter den Hydrophobierungsmitteln sind Kaliummethylsilikonat, Kaliummethylsilantriolat und Kaliumethylsilantriolat sowie deren Mischungen besonders bevorzugt. Insbesondere liegen in den erfindungsgemäßen Lasur-Beschichtungsmassen wasserlösliche Alkysilikonate, insbesondere Kaliummethylsilikonat, und mindestens ein Alkalisalz von Monoalkylsilantriol, wie Methylsilantriol, Dialkylsilandiol, wie Dimethylsilandiol, und/oder Trialkylsilanol, wie Trimethylsilanol, insbesondere das Kaliumssalz von Methylsilantriol, nebeneinander vor.

Unter den Monoalkylsilantriolen, Dialkylsilandiolen und Trialkylsilanolen sowie den Alkalisalzen dieser Silanole sind die C₁-C₅-Alkylsilantriole besonders geeignet. Besonders bevorzugt sind die Kaliumsalze von Methylsilantriol und Ethylsilantriol. Es hat sich gezeigt, dass die Alkalisalze der Silanole, insbesondere die Kaliumsalze, stabiler sind als die reinen Silanole. Vorzugsweise werden die Alkylsilanole und/oder deren Alkalisalze in die erfindungsgemäße Lasur-Beschichtungsmassen in Form wässriger Lösungen eingebracht. Diese wässrigen Lösungen können dabei zum Beispiel in Konzentrationen von 0,5 bis 90% eingesetzt werden, wobei Konzentration im Bereich von 1 bis 5 Gewichtsprozent häufig praktikabel sind.

Exemplarisch seien als geeignete Vertreter der Alkylalkoxysilane Verbindung der nachfolgenden Formel (I) genannt: (R¹-O)ₓ(H)_{y}M(R²)_{z} mit M = Si, Ge, Ti, Zr oder Hf, R1 = Methyl, Ethyl, i-Propyl, n-Propyl, i-Butyl, n-Butyl oder t-Butyl, R2 = geradkettig oder verzweigtes C3- bis C32-Alkyl, Cycloalkyl, Aryl, Alkylaryl, x = 1, 2 oder 3, y = 0, 1 oder 2, z = 1, 2 oder 3, wobei x + y = 1, 2 oder 3 und x + y + z = 4 ist. Bevorzugt wird zurückgegriffen auf Verbindung gemäß Formel (I), für die gilt: M = Si, R1 = Ethyl oder i-Propyl oder n-Propyl, insbesondere Ethyl, R2 = geradkettig oder verzweigtes C5- bis C12-Alkyl, insbesondere n-Octyl oder iso-Octyl, und x = 2 oder 3, insbesondere 3, y = 0 und z = 1 oder 2, insbesondere 1. Besonders geeignete Alkylalkoxysilane sind Mono-, Di- oder Triethoxy-(C6-bis C12-Alkyl)-silan, wobei Triethoxy-iso-octylsilan und Triethoxy-n-octylsilan besonders bevorzugt sind. Geeignete Alkylalkoxysiloxane stellen Dimere und Oligomere der vorangehend genannten Alkylalkoxysilane dar.

Besonders bevorzugt wird auch auf wasserlösliche Hydrophobierungsmittel in Form von Alkylsilikonaten zurückgegriffen. Geeignete Alkylsilikonate umfassen Verbindungen der Formel (II) HO-[Si(R³)(OX)-O-]ₙH, worin der Rest R³ eine Alkylgruppe mit 1 bis 8 C-Atomen, X ein Kation und n eine Zahl im Bereich von 1 bis 6 bedeutet. Vorzugsweise liegt das Molgewicht dieser Alkylsilikonate im Bereich von 100 bis 500. In einer besonders geeigneten Ausgestaltung ist R3 eine Methyl-, Ethyl-, i-Propyl- oder n-Propylgruppe, vorzugsweise eine Methylgruppe. Als Kationen sind insbesondere die Alkalimetalle, insbesondere Kalium, geeignet. Beispielhaft seien als bevorzugte Alkylsilikonate Kaliummethylsilikonat und Natriumpropylsilikonat genannt. Als besonders vorteilhaft hat sich hier Kaliummethylsilikonat erwiesen. Der Trockenanteil an Hydrophobierungsmittel, insbesondere an Alkylsilikonaten wie Kaliummethylsilikonaten, in den erfindungsgemäßen Beschichtungszusammensetzung liegt regelmäßig im Bereich vom 0,001 bis 9,0 Gew.%, bevorzugt 0,01 bis 6,0 Gew.-% und besonders bevorzugt 0,1 bis 4 Gew.%, bezogen auf das Gesamtgewicht der Lasur-Beschichtungsmasse.

Des Weiteren verfügen die erfindungsgemäßen Lasur-Beschichtungsmassen regelmäßig über mindestens ein Additiv. Geeignete Additive sind dabei vorzugsweise ausgewählt aus der Gruppe bestehend aus Verdickern, Entschäumern, Flammschutzmitteln, Filmkonservierungsmitteln, Filmbildehilfsmitteln, Lichtschutzmitteln, Neutralisationsmittel bzw. Basen und beliebigen Mischungen hiervon.

Geeignete Neutralisationsmittel bzw. Basen umfassen zum Beispiel Natriumhydroxid, z.B. in Form von Natronlauge, Kaliumhydroxid wie auch flüchtige Neutralisationsmittel wie Ammoniaklösung und/oder Amine wie 2-Amino-2-methyl-1-propanol und/oder 2-Amino-2-ethyl-1,3-propandiol.

Geeignete Verdicker können z.B. ausgewählt sein aus der Gruppe bestehend aus Polyacrylat-Verdickern, Polyurethan-Verdickern, Polyharnstoff-Verdickern, Cellulose-Verdickern, insbesondere Hydroxyethylcellulose und/oder Methylcellulose, Verdickern auf Polysaccharidbasis, Verdickern auf Polyether-Polyolbasis, Polyvinylalkohol-Verdickern, Polyetherpolyol-Verdickern, und beliebigen Mischungen hiervon.

Zwar ist es grundsätzlich möglich, die erfindungsgemäßen Lasur-Beschichtungsmassen auch Konservierungsmittel zuzusetzen. Allerdings hat sich als ein besonderer Vorteil der erfindungsgemäßen Schichtungsmassen erwiesen, dass diese über einen hinreichend langen Zeitraum auch ohne Zusätze an Konservierungsmittel stabil sind. Erfindungsgemäße Lasur-Beschichtungsmassen zeichnen sich in einer bevorzugten Ausführungsform demgemäß dadurch aus, dass sie im Wesentlichen im Wesentlichen frei von Konservierungsmitteln sind. Darüber hinaus sind auch solche erfindungsgemäßen wässrigen Lasur-Beschichtungsmassen bevorzugt, die frei von organischen Lösungsmitteln sind.

Vor allem solche erfindungsgemäßen Lasur-Beschichtungsmassen lassen sich besonders anwendungsfreundlich applizieren, die über eine bei 23°C ermittelte Fließkurve gebildet aus den auf der Abszisse aufgetragenen Schergeschwindigkeiten γ̇ und den auf der Ordinate aufgetragenen korrespondierenden Schubspannungswerten τ verfügen, die bei einer Schergeschwindigkeit γ̇ von 400 s⁻¹ einen Schubspannungswert τ im Bereich von 0,05 bis 0,3 Pa·s und vorzugsweise im Bereich von 0,1 bis 0,2 Pa·s besitzt und/oder die bei einer Schergeschwindigkeit γ̇ von 1200 s⁻¹ einen Schubspannungswert τ im Bereich von 0,01 bis 0,15 und vorzugsweise im Bereich von 0,05 bis 0,10 Pa·s besitzt.

Die Fließkurven lassen sich z.B. mit dem Rotationsrheometer HAAKE RheoStress 1 der Firma Thermo Scientific unter Verwendung der Sofware HAAKE RheoWin 4.30.0030 bestimmen. Um vergleichbare Ergebnisse zu erhalten, sollten die Messungen bei konstanter Temperatur, beispielsweise bei 23,00 °C ± 0,20 °C vorgenommen werden. Im Allgemeinen reicht es aus, eine Rotationsrampe von 0 bis 1.500 s⁻¹ im Zeitraum von 180 s zu fahren. Der zeitliche Verlauf der Messungen lässt sich untergliedern in drei Segmente, wobei im ersten Segment die Messprobe über eine Dauer von 180 s temperiert wird, anschließend über einen Zeitraum von 180 s ein Schergefälle von 0 bis 1500 1/s (Segment 2) und sodann über einen Zeitraum von 180 s ein Schergefälle von 1500 bis 0 1/s (Segment 3) gefahren wird. Die Werte für die Schubspannung werden aus dem Segment 3 für die Schergeschwindigkeiten 400 1/s und 1200 1/s bestimmt. Für die Temperierung kann das Gerät Haake Thermostat V verwendet werden. In Form und Material bzw. die Messgeometrie der Messapparatur bzw. des Rotors basieren zweckmäßigerweise auf der Spezifikation Z20 DIN. Für die Prüfbedingungen können die Standardeinstellungen gemäß dem Messsystem Z20 DIN verwandt werden. Ein geeignetes Spaltmaß beträgt 4,200 mm, ein geeignetes Mess- bzw. Probenvolumen 8,2 ml. Zur Minimierung von Messfehlern sind nur Messpunkte bei Schergeschwindigkeiten größer 10 s⁻¹ zu berücksichtigen. Die Steigung m zwischen Messpunkten wurde nach der folgenden Gleichung berechnet: m = Δ τ / Δ γ̇. Der den genannten Schergeschwindigkeitsbereichen zugewiesene Mittelwert der Steigung der Fließkurve errechnet sich aus den Mittelwerten der Steigungen zwischen den einzelnen Messpunkten in dem genannten Bereich der Schergeschwindigkeiten.

Bevorzugte Ausführungsformen erfindungsgemäßer wässriger Lasur-Beschichtungsmassen enthalten
1 bis 45 Gew.%, vorzugsweise 2 bis 35 Gew.% und besonders bevorzugt 5 bis 30 Gew. % an dem polymeren organischen Bindemittel (Feststoffanteil) und/oder
0,05 bis 15 Gew.%, bevorzugt 0,1 bis 12 Gew. % und besonders bevorzugt 0,5 bis 8 Gew. % an Wasserglas (Feststoffanteil) und/oder
0,001 bis 4 Gew. %, bevorzugt 0,005 bis 3 Gew.% und besonders bevorzugt 0,01 bis 2 Gew.% an Stabilisator (Feststoffanteil) und/oder
0,01 bis 5 Gew.%, bevorzugt 0,05 bis 4 Gew. % und besonders bevorzugt 0,1 bis 2 Gew. % an Dispergiermittel (Feststoffanteil) und/oder
0,05 bis 10 Gew.%, bevorzugt 0,01 bis 5 Gew.% und besonders bevorzugt 0,1 bis 3 Gew.% an Additiven (Feststoffanteil) und/oder
0,05 bis 20 Gew.%, bevorzugt 0,1 bis 15 Gew.% und besonders bevorzugt 0,4 bis 12 Gew.% an Mattierungsmittel (Feststoffanteil), und/oder
0,001 bis 2,0 Gew.%, bevorzugt 0,01 bis 1,0 Gew.-% und besonders bevorzugt 0,1 bis 0,5 Gew.% Hydrophobierungsmittel (Feststoffanteil), insbesondere Kaliummethylsiliconat und/oder Kaliummethylsilantriolat, und/oder
0,01 bis 3,0 Gew.%, bevorzugt 0,03 bis 2,0 Gew.%, besonders bevorzugt 0,1 bis 1,5 Gew.% und insbesondere 0,3 bis 1,0 Gew.-% Wachs (Feststoffanteil), und/oder
10 bis 90 Gew.%, vorzugsweise 35 bis 85 Gew.% und besonders bevorzugt 55 bis 80 Gew. % an Wasser,
jeweils bezogen auf das Gesamtgewicht der Lasur-Beschichtungsmasse,
wobei die die Lasur-Beschichtungsmasse bildenden Komponenten stets 100 Gew.% ergeben.

In einer besonders bevorzugten Ausführungsform enthalten die erfindungsgemäßen Lasur-Beschichtungsmassen
1 bis 45 Gew.%, vorzugsweise 2 bis 35 Gew.% und besonders bevorzugt 5 bis 30 Gew. % an dem polymeren organischen Bindemittel (Feststoffanteil) und
0,05 bis 15 Gew.%, bevorzugt 0,1 bis 12 Gew. % und besonders bevorzugt 0,5 bis 8 Gew. % an Wasserglas (Feststoffanteil) und
0,001 bis 4 Gew. %, bevorzugt 0,005 bis 3 Gew.% und besonders bevorzugt 0,01 bis 2 Gew.% an Stabilisator (Feststoffanteil) und
0,01 bis 5 Gew.%, bevorzugt 0,05 bis 4 Gew. % und besonders bevorzugt 0,1 bis 2 Gew. % an Dispergiermittel (Feststoffanteil) und
0,05 bis 10 Gew.%, bevorzugt 0,01 bis 5 Gew.% und besonders bevorzugt 0,1 bis 3 Gew.% an Additiven (Feststoffanteil) und
0,05 bis 20 Gew.%, bevorzugt 0,1 bis 15 Gew.% und besonders bevorzugt 0,4 bis 12 Gew.% an Mattierungsmittel (Feststoffanteil) und
0,001 bis 2,0 Gew.%, bevorzugt 0,01 bis 1,0 Gew.-% und besonders bevorzugt 0,1 bis 0,5 Gew.% Hydrophobierungsmittel (Feststoffanteil), insbesondere Kaliummethylsiliconat und/oder Kaliummethylsilantriolat, und
0,01 bis 3,0 Gew.%, bevorzugt 0,03 bis 2,0 Gew.%, besonders bevorzugt 0,1 bis 1,5 Gew.% und insbesondere 0,3 bis 1,0 Gew.-% Wachs (Feststoffanteil), und
10 bis 90 Gew.%, vorzugsweise 35 bis 85 Gew.% und besonders bevorzugt 55 bis 80 Gew. % an Wasser,
jeweils bezogen auf das Gesamtgewicht der Lasur-Beschichtungsmasse,
wobei die die Lasur-Beschichtungsmasse bildenden Komponenten stets 100 Gew.% ergeben.

Solche erfindungsgemäßen wässrigen Lasur-Beschichtungsmassen führen zu Beschichtungen mit ausgeprägter Reinigungsfähigkeit, ohne dass gleichzeitig die Beschichtung in Mitleidenschaft gezogen wird, die enthalten bzw. gebildet sind aus
a) mindestens einem polymeren organischen Bindemittel auf Dispersionsbasis, insbesondere umfassend oder bestehend aus Styrolacrylat-Copolymeren,
b) Wasserglas, insbesondere Kaliumwasserglas,
c) mindestens einem die Lagerfähigkeit der wässrigen Beschichtungsmasse steigernden Stabilisator, insbesondere umfassend oder bestehend aus mindestens einer wasserlöslichen organischen Stickstoffverbindung, insbesondere mit einer, zwei oder mehr quartären Ammoniumgruppen,
d) mindestens einem Dispergiermittel, insbesondere Salzen von Polyacrylsäuren,
e) mindestens einem Wachs, insbesondere zugegeben in Form einer wässrigen Wachsemulsion,
f) mindestens einem Additiv, insbesondere umfassend Verdicker, vorzugsweise Polyurethan-Verdicker, Polyharnstoff-Verdicker und/oder Cellulose-Verdicker, Entschäumer und Neutralisationsmitteln bzw. Basen,
g) mindestens einem Mattierungsmittel, insbesondere Fällungskieselsäure,
j) mindestens einem Hydrophobierungsmittel, insbesondere Kaliummethylsilikonat und/oder Kaliummethylsilantriolat.

Die vorangehend genannten erfindungsgemäßen wässrigen Lasur-Beschichtungsmassen können ferner ausgestattet sein mit mindestens h) einem Füllstoff und/oder mindestens einem Pigment sowie gegebenenfalls auch mit i) Kieselsol. Hierbei kann die Menge an Pigmenten und/oder Füllstoffen in der Weise gewählt werden, dass stets ein lasierender Auftrag auf einer Substratoberfläche eines Substrates gelingt.

Die vorangehend genannten erfindungsgemäßen Lasur-Beschichtungsmassen sind in einer bevorzugten Ausgestaltung im Wesentlichen frei von Konservierungsmitteln und können darüber hinaus auch im Wesentlichen frei von organischen Lösungsmitteln sein.

Die der Erfindung zugrunde liegende Aufgabe wird des Weiteren gelöst durch ein Beschichtungssystem, insbesondere Lasurbeschichtungssystem, enthaltend oder gebildet aus mindestens einer erfindungsgemäßen Lasur-Beschichtungsmasse und mindestens einer wässrigen Farbtonpaste. Die erfindungsgemäßen Lasur-Beschichtungsmassen können hierbei die Basisrezeptur bilden, die mit einer Vielzahl an unterschiedlichen Farbtönen abgewöhnt werden kann. Die erfindungsgemäßen Lasur-Beschichtungsmasse wird dabei als transparente Basisrezeptur verwendet.

Die der Erfindung zu Grunde liegende Aufgabe wird des Weiteren gelöst durch eine erfindungsgemäße Beschichtung, insbesondere Lasur-Beschichtung, erhalten oder erhältlich aus einer erfindungsgemäßen Lasur-Beschichtungsmasse oder aus einem erfindungsgemäßen Beschichtungssystem. Die erfindungsgemäßen Beschichtungen verfügen dabei vorzugsweise über eine durchschnittliche Trockenschichtdicke im Bereich von 40 bis 150 µm, bevorzugt im Bereich von 50 bis 120 µm und besonders bevorzugt im Bereich von 55 bis 100 µm.

Auch wird die der Erfindung zu Grunde liegende Aufgabe gelöst durch ein Substrat enthaltend eine beschichtbare Oberfläche und auf dieser beschichtbaren Oberfläche eine erfindungsgemäße Beschichtung. Als geeignete Substrate kommen zum Beispiel mineralische Substrate, insbesondere Putze, sowie Tapeten, Leinwände, Farbanstriche, Papier oder Karton in Betracht.
Schließlich wird die der Erfindung zu Grunde liegende Aufgabe gelöst durch Kit-of-Parts für ein Beschichtungssystem, insbesondere ein erfindungsgemäßes Beschichtungssystem, umfassend mindestens eine erfindungsgemäße Lasur-Beschichtungsmasse und mindestens eine wässrige Farbtonpaste.

Die erfindungsgemäßen Lasur-Beschichtungsmassen, das erfindungsgemäße Beschichtungssystem wie auch das erfindungsgemäße Kit-of-Parts können demgemäß eingesetzt werden für die, insbesondere lasierende, Beschichtung von Substratoberflächen, vorzugsweise in Innenräumen.

Mit den erfindungsgemäßen Lasur-Beschichtungsmassen lassen sich überraschenderweise Lasur-Beschichtungen erhalten, die über ein hohes Maß an Reinigungsfähigkeit verfügen. Beispielsweise können Senf- oder Ketschup-Flecken entfernt werden, ohne dass Abrieb oder sonstige Verfärbungsphänomene beobachtet werden. Damit eignen sich die erfindungsgemäßen Lasur-Beschichtungsmassen insbesondere auch für die Anbringung im Küchen- und Wohnbereich. Dies gilt insbesondere auch für aus den erfindungsgemäßen Lasur-Beschichtungsmassen erhaltene Lasur-Beschichtungen. Mit den erfindungsgemäßen Lasur-Beschichtungsmassen gelingt überdies erstmals der Zugang zu wässrigen Dispersionssilikat-Lasuren, insbesondere auch zu solchen Lasuren mit mattem Erscheinungsbild. Von besonderem Vorteil ist auch, dass die erfindungsgemäßen Beschichtungen dabei gleichzeitig Konservierungsmittel frei und Lösungsmittel frei sein können, ohne Einbußen bei der Reinigungsfähigkeit in Kauf nehmen zu müssen. Die erfindungsgemäßen Lasur-Beschichtungsmassen verfügen auch ohne Konservierungsmittel über hohes Maß an Schimmelresistenz. Die mit den erfindungsgemäßen Lasur-Beschichtungsmassen erhaltenen Beschichtungen sind regelmäßig raumlufthygienisch unbedenklich. Unter anwendungstechnischen Gesichtspunkten ist überdies von Vorteil, dass sich die erfindungsgemäßen Lasur-Beschichtungsmassen mit einer Vielzahl an Farbtonzusammensetzungen abtönen lassen.

Die in der voranstehenden Beschreibung und den Ansprüchen offenbarten Merkmale der Erfindung können sowohl einzeln als auch in jeder beliebigen Kombination für die Verwirklichung der Erfindung vorteilhaft sein.

## Patentansprüche

1. Transparente wässrige Lasur-Beschichtungsmasse enthaltend oder bestehend aus
a) mindestens einem polymeren organischen Bindemittel auf Dispersionsbasis,
b) Wasserglas,
c) mindestens einem die Lagerfähigkeit der wässrigen Beschichtungsmasse steigernden Stabilisator, insbesondere umfassend oder bestehend aus mindestens einer wasserlöslichen organischen Stickstoffverbindung,
d) mindestens einem Dispergiermittel und/oder mindestens einem Netzmittel, insbesondere mindestens einem Dispergiermittel,
e) mindestens einem Wachs, insbesondere zugegeben in Form einer wässrigen Wachsemulsion, und
f) mindestens einem Additiv.

2. Beschichtungsmasse nach Anspruch 1, ferner umfassend
g) mindestens ein Mattierungsmittel und/oder
h) mindestens einen Füllstoff und/oder mindestens ein Pigment und/oder
i) Kieselsol und/oder
j) mindestens ein Hydrophobierungsmittel.

3. Beschichtungsmasse nach Anspruch 1 oder 2, **dadurch gekennzeichnet, dass** die wasserlösliche organische Stickstoffverbindung ausgewählt ist aus der Gruppe bestehend aus Verbindungen mit einer, zwei oder mehr Ammoniumgruppen, insbesondere quartären Ammoniumgruppen, Alkylendiamintetracarboxylsäure, insbesondere Ethylendiamintetraessigsäure, Salzen der Alkylendiamintetracarboxylsäure, insbesondere Salzen der Ethylendiamintetraessigsäure, Alkylendiamintetracarboxlat, insbesondere Ethylendiamintetraacetat, alkoxyliertes, insbesondere propoxyliertes, Tetraalkylalkylendiamin, insbesondere Tetraalkylethylendiamin, Tetrahydroxyalkylalkylendiamin, insbesondere N,N,N',N'-Tetrakis-(2-hydroxypropyl)-ethylendiamin, alkoxyliertem, insbesondere ethoxyliertem oder propoxyliertem, (N,N')-Tetraalkylalkylendiamin, insbesondere (N,N')-Tetraalkylethylendiamin, und beliebigen Mischungen hiervon.

4. Beschichtungsmasse nach einem der vorangehenden Ansprüche, **dadurch gekennzeichnet, dass**
das mindestens eine Additiv Verdicker, Entschäumer, Flammschutzmittel, Filmkonservierungsmittel, Filmbildehilfsmittel, Lichtschutzmittel, Neutralisationsmittel oder Basen oder beliebige Mischungen hiervon umfasst.

5. Beschichtungsmasse nach einem der vorangehenden Ansprüche, **dadurch gekennzeichnet, dass**
das polymere organische Bindemittel auf Dispersionsbasis ausgewählt ist aus der Gruppe bestehend aus Vinylacetat/Ethylen-Copolymeren, Copolymeren auf Basis von Vinylaromaten, insbesondere gebildet aus Styrol und (Meth)acrylaten, Copolymeren auf Basis von Acrylaten und gegebenenfalls Methacrylaten, insbesondere Reinacrylate, und beliebigen Mischungen hiervon, vorzugsweise Styrolacrylat-Copolymeren.

6. Beschichtungsmasse nach einem der vorangehenden Ansprüche, **dadurch gekennzeichnet, dass**
das Wasserglas ausgewählt aus der Gruppe bestehend aus Natrium-, Kalium-, Lithiumwasserglas und beliebigen Mischungen hiervon und insbesondere Kaliumwasserglas darstellt.

7. Beschichtungsmasse nach einem der vorangehenden Ansprüche, **dadurch gekennzeichnet, dass**
dieses im Wesentlichen frei von organischen Lösungsmitteln und/oder im Wesentlichen frei von Konservierungsmitteln ist.

8. Beschichtungsmasse nach einem der Ansprüche 2 bis 7, **dadurch gekennzeichnet, dass**
der Verdicker ausgewählt ist aus der Gruppe bestehend aus Polyacrylat-Verdickern, Polyurethan-Verdickern, Polyharnstoff-Verdickern, Cellulose-Verdickern, insbesondere Hydroxyethylcellulose und/oder Methylcellulose, Polyvinylalkohol-Verdickern, Polyetherpolyol-Verdickern, und beliebigen Mischungen hiervon und/oder dass das Mattierungsmittel ausgewählt ist aus der Gruppe bestehend aus Kieselsäure, insbesondere Fällungskieselsäure, Aluminiumnatriumsalzen, Diatomene, Kaolin und beliebigen Mischungen hiervon und/oder dass
das Hydrophobierungsmittel ausgewählt ist aus der Gruppe bestehend aus Alkylakoxysilanen, Alkylalkoxysiloxanen, wasserlöslichen Alkysilikonaten, Monoalkylsilantriol, Dialkylsilandiol, Trialkylsilanol, den Alkalisalzen von Monoalkylsilantriol, Dialkylsilandiol undTrialkylsilanol, und beliebigen Mischungen hiervon und insbesondere Kaliummethylsilikonat, Kaliummethylsilantriolat und/oder Kaliumethylsilantriolat darstellt.

9. Beschichtungsmasse nach einem der vorangehenden Ansprüche, enthaltend
1 bis 45 Gew.%, vorzugsweise 2 bis 35 Gew.% und besonders bevorzugt 5 bis 30 Gew. % an dem polymeren organischen Bindemittel (Feststoffanteil) und/oder
0,05 bis 15 Gew.%, bevorzugt 0,1 bis 12 Gew. % und besonders bevorzugt 0,5 bis 8 Gew. % an Wasserglas (Feststoffanteil) und/oder
0,001 bis 4 Gew. %, bevorzugt 0,005 bis 3 Gew.% und besonders bevorzugt 0,01 bis 2 Gew.% an Stabilisator (Feststoffanteil) und/oder
0,01 bis 5 Gew.%, bevorzugt 0,05 bis 4 Gew. % und besonders bevorzugt 0,1 bis 2 Gew. % an Dispergiermittel (Feststoffanteil) und/oder
0,05 bis 10 Gew.%, bevorzugt 0,01 bis 5 Gew.% und besonders bevorzugt 0,1 bis 3 Gew.% an Additiven (Feststoffanteil) und/oder
0,05 bis 20 Gew.%, bevorzugt 0,1 bis 15 Gew.% und besonders bevorzugt 0,4 bis 12 Gew.% an Mattierungsmittel (Feststoffanteil), und/oder
0,001 bis 2,0 Gew.%, bevorzugt 0,01 bis 1,0 Gew.-% und besonders bevorzugt 0,1 bis 0,5 Gew.% Hydrophobierungsmittel (Feststoffanteil), insbesondere Kaliummethylsiliconat und/oder Kaliummethylsilantriolat, und/oder
0,01 bis 3,0 Gew.%, bevorzugt 0,03 bis 2,0 Gew.%, besonders bevorzugt 0,1 bis 1,5 Gew.% und insbesondere 0,3 bis 1,0 Gew.-% Wachs (Feststoffanteil), und/oder
10 bis 90 Gew.%, vorzugsweise 35 bis 85 Gew.% und besonders bevorzugt 55 bis 80 Gew. % an Wasser,
jeweils bezogen auf das Gesamtgewicht der Beschichtungsmasse,
wobei die die Beschichtungsmasse bildenden Komponenten stets 100 Gew.% ergeben.

10. Beschichtungsmasse nach einem der vorangehenden Ansprüche, enthaltend Mattierungsmittel, Füllstoffe und Pigmente in einer Gesamtmenge nicht oberhalb von 20 Gew.%, vorzugsweise nicht oberhalb von 15 Gew.% und besonders bevorzugt nicht oberhalb von 10 Gew.%, bezogen auf das Gesamtgewicht der Beschichtungsmasse.

11. Beschichtungsmasse nach einem der vorangehenden Ansprüche, **dadurch gekennzeichnet, dass**
das Dispergiermittel mindestens ein polyanionisches Dispergiermittel umfasst, insbesondere ausgewählt aus der Gruppe bestehend aus Polycarboxylaten, insbesondere Salze von Polyacrylsäuren, Polyphosphaten, insbesondere lineare Polyphosphate und/oder zyklische Metaphosphate, und beliebigen Mischungen hiervon, vorzugsweise Salzen von Polyacrylsäuren.

12. Beschichtungssystem, insbesondere Lasurbeschichtungssystem, enthaltend oder gebildet aus
mindestens einer Beschichtungsmasse nach einem der vorangehenden Ansprüche und mindestens einer wässrigen Farbtonpaste.

13. Beschichtung, insbesondere Lasur-Beschichtung, erhalten oder erhältlich aus einer Beschichtungsmasse nach einem der Ansprüche 1 bis 11 oder aus einem Beschichtungssystem nach Anspruch 12.

14. Substrat enthaltend eine beschichtbare Oberfläche und auf dieser beschichtbaren Oberfläche eine Beschichtung nach Anspruch 13.

15. Kit-of-Parts für ein Beschichtungssystem, insbesondere nach Anspruch 12, umfassend
mindestens eine Beschichtungsmasse nach einem der Ansprüche 1 bis 11 und mindestens eine wässrige Farbtonpaste.

16. Verwendung der Beschichtungsmasse nach einem der Ansprüche 1 bis 11 oder des Beschichtungssystems nach Anspruch 12 oder des Kit-of-Parts nach Anspruch 15 für die, insbesondere lasierende, Beschichtung von Substratoberflächen, vorzugsweise in Innenräumen.

## Claims

1. Transparent aqueous glaze-coating material containing or consisting of
a) at least one polymer organic binding agent in dispersion,
b) water glass,
c) at least one stabilising agent increasing the suitability for storage of the aqueous coating material, in particular comprising or consisting of at least one water soluble organic nitrogen compound,
d) at least one dispersing agent and/or at least one wetting agent, in particular at least one dispersing agent,
e) at least one wax, in particular added in the form of an aqueous wax emulsion, and
f) at least one additive.

2. The coating material according to claim 1, further comprising
g) at least one matting agent and/or
h) at least one filler and/or at least one pigment and/or
i) silica sol and/or
j) at least one hydrophobing agent.

3. The coating material according to claim 1 or 2, **characterised in that** the water-soluble organic nitrogen compound is selected from a group consisting of compounds with one, two or more ammonium groups, in particular quaternary ammonium groups, alkylene diamine tetracarboxylic acid, in particular ethylene diamine tetraacetic acid, salts of alkylene diamine tetracarboxylic acid, in particular salts of ethylene diamine tetraacetic acid, alkylene diamine tetracarboxylate, in particular ethylene diamine tetraacetate, alkoxylated, in particular propoxylated, tetraalkyl alkylene diamine, in particular tetraalkyl ethylene diamine, tetrahydroxy alkyl alkylene diamine, in particular N,N,N',N'-tetrakis-(2-hydroxypropyl)-ethylene diamine, alkoxylated, in particular ethoxylated or propoxylated, (N,N')-tetraalkyl alkylene diamine, in particular (N,N')-tetraalkyl ethylene diamine, and any mixtures thereof.

4. The coating material according to any of the preceding claims, **characterised in that** the at least one additive includes thickeners, anti-foaming agents, flame retardants, film preservatives, film-forming agents, light stabilisers, neutralising agents or bases or any mixtures thereof.

5. The coating material according to any of the preceding claims, **characterised in that** the polymer organic binding agent in dispersion is selected from a group consisting of vinyl acetate/ethylene copolymers, copolymers based on vinyl aromatics, in particular formed of styrene and (meth)acrylates, copolymers based on acrylates and possibly methacrylates, in particular pure acrylates, and any mixtures thereof, preferably styrene acrylate copolymers.

6. The coating material according to any of the preceding claims, **characterised in that** the water glass is selected from a group consisting of sodium water glass, potassium water glass, lithium water glass and any mixtures thereof and in particular potassium water glass.

7. The coating material according to any of the preceding claims, **characterised in that** the latter is substantially free of organic solvents and/or substantially free of preservatives.

8. The coating material according to any of claims 2 to 7, **characterised in that** the thickener is selected from a group consisting of polyacrylate thickeners, polyurethane thickeners, polyurea thickeners, cellulose-thickeners, in particular hydroxyethyl cellulose and/or methyl cellulose, polyvinyl alcohol thickeners, polyether polyol thickeners, and any mixtures thereof and/or **in that** the matting agent is selected from a group consisting of silica, in particular silicic acid precipitate, aluminium sodium salts, diatomenes, kaolin and any mixtures thereof and/or **in that** the hydrophobing agent is selected from a group consisting of alkyl alkoxysilanes, alkyl alkoxysiloxanes, water-soluble alkyl siliconates, monoalkyl silanetriol, dialkyl silanediol, trialkyl silanol, the alkali salts of monoalkyl silanetriol, dialkyl silanediol and trialkyl silanol, and any mixtures thereof and in particular potassium methyl siliconate, potassium methyl silanetriolate and/or potassium ethyl silanetriolate.

9. The coating material according to any of the preceding claims, containing
1 to 45 wt.%, preferably 2 to 35 wt.% and particularly preferably 5 to 30 wt.% of the polymeric organic binding agent (solid content) and/or
0.05 to 15 wt.%, preferably 0.1 to 12 wt.% and particularly preferably 0.5 to 8 wt.% water glass (solid content) and/or
0.001 to 4 wt.%, preferably 0.005 to 3 wt.% and particularly preferably 0.01 to 2 wt.% stabilising agent (solid content) and/or
0.01 to 5 wt.%, preferably 0.05 to 4 wt.% and particularly preferably 0.1 to 2 wt.% dispersing agent (solid content) and/or
0.05 to 10 wt.%, preferably 0.01 to 5 wt.% and particularly preferably 0.1 to 3 wt.% additives (solid content) and/or
0.05 to 20 wt.%, preferably 0.1 to 15 wt.% and particularly preferably 0.4 to 12 wt.% matting agent (solid content), and/or
0.001 to 2.0 wt.%, preferably 0.01 to 1.0 wt.% and particularly preferably 0.1 to 0.5 wt.% hydrophobing agent (solid content), in particular potassium methyl siliconate and/or potassium methyl silanetriolate, and/or
0.01 to 3.0 wt.%, preferably 0.03 to 2.0 wt.%, particularly preferably 0.1 to 1.5 wt.% and in particular 0.3 to 1.0 wt.% wax (solid content), and/or 10 to 90 wt.%, preferably
35 to 85 wt.% and particularly preferably 55 to 80 wt.% water,
relative to the total weight of the coating material respectively,
wherein the components forming the coating material always make up 100 wt.%.

10. The coating material according to any of the preceding claims, containing matting agents, fillers and pigments in a total amount of not more than 20 wt.%, preferably not more than 15 wt.% and particularly preferably not more than 10 wt.%, relative to the total weight of the coating material.

11. The coating material according to any of the preceding claims, **characterised in that** the dispersing agent comprises at least one polyanionic dispersing agent, in particular selected from a group consisting of polycarboxylates, in particular salts of polyacrylic acids, polyphosphates, in particular linear polyphosphates and/or cyclical metaphosphates, and any mixtures thereof, preferably salts of polyacrylic acids.

12. A coating system, in particular glaze coating system, containing or formed from at least one coating material according to any of the preceding claims and at least one aqueous colour paste.

13. A coating, in particular glaze-coating, obtained or obtainable from a coating material according to any of claims 1 to nor from a coating system according to claim 12.

14. A substrate containing a coatable surface and on said coatable surface a coating according to claim 13.

15. A kit-of-parts for a coating system, in particular according to claim 12, comprising at least one coating material according to any of claims 1 to 11 and at least one aqueous colour paste.

16. A use of the coating material according to any of claims 1 to 11 or the coating system according to claim 12 or the kit-of-parts according to claim 15 for the coating, in particular glazing, of substrate surfaces, preferably in inner spaces.

## Revendications

1. Masse de revêtement en vernis aqueux transparent contenant, ou consistant en
a) au moins un liant organique polymère sur la base d'une dispersion,
b) un silicate,
c) au moins un stabilisateur améliorant la stabilité au stockage du revêtement aqueux, en particulier comprenant ou consistant en au moins un composé d'azote organique soluble dans l'eau,
d) au moins un agent dispersant et/ou au moins un agent mouillant, en particulier au moins un agent dispersant,
e) au moins une cire, en particulier ajoutée sous la forme d'une émulsion aqueuse de cire, et
f) au moins un additif.

2. Masse de revêtement selon la revendication 1, comprenant en outre
g) au moins un agent de matité et/ou
h) au moins un agent de charge et/ou au moins un pigment et/ou
i) un sol de silice et/ou
j) au moins un agent d'hydrophobisation.

3. Masse de revêtement selon la revendication 1 ou la revendication 2, **caractérisée en ce que**
le composé d'azote organique soluble dans l'eau est sélectionné dans le groupe comprenant des composés avec un, deux ou plusieurs groupes ammonium, en particulier des groupes ammonium quaternaires, un acide alkylène-diamine-tétracarboxylique, en particulier un acide éthylène-diamine-tétraacétique, des sels de l'acide alkylène-diamine-tétracarboxylique, en particulier des sels de l'acide éthylène-diamine-tétraacétique, un alkylène-diamine-tétracarboxylique, en particulier un éthylène-diamine-tétraacétate, en particulier une tétra-alkyle-alkylène-diamine propoxylée, en particulier une tétra-alkyle-éthylène-diamine, tétra-hydroxy-alkyle-alkylène-diamine, en particulier une N,N,N',N'-tétrakis-(2-hydroxypropyle)-éthylène-diamine, une (N,N')-tétra-alkyle-alkylène-diamine alkoxylée, en particulier éthoxylée ou propoxylée, en particulier une (N,N')- tétra-alkyle-éthylène-diamine, et des mélanges quelconques de ceux-ci.

4. Masse de revêtement selon l'une des revendications précédentes, **caractérisée en ce que**
ledit au moins un additif comprend des agents épaississants, antimoussants, ignifuges, des agents de conservation des films, des agents auxiliaires filmogènes, des agents photoprotecteurs, neutralisants ou des bases ou des mélanges quelconques de ceux-ci.

5. Masse de revêtement selon l'une des revendications précédentes, **caractérisée en ce que**
le liant organique polymère est sélectionné sur la base d'une dispersion dans le groupe comprenant copolymères d'acétate de vinyle/d'éthylène, copolymères à base de composés vinylaromatiques, en particulier composés de styrène et de (méth)acrylates, copolymères à base d'acrylates et éventuellement de méthacrylates, en particulier d'acrylates purs, et des mélanges quelconques de ceux-ci, préférentiellement des copolymères d'acrylate de styrène.

6. Masse de revêtement selon l'une des revendications précédentes, **caractérisée en ce que**
le silicate est sélectionné dans le groupe comprenant silicate de sodium, de potassium, de lithium et des mélanges quelconques de ceux-ci, et est en particulier un silicate de potassium.

7. Masse de revêtement selon l'une des revendications précédentes, **caractérisée en ce que**
celui-ci est sensiblement exempt de solvants organiques et/ou sensiblement exempt d'agents de conservation.

8. Masse de revêtement selon l'une des revendications 2 à 7, **caractérisée en ce que** l'agent épaississant est sélectionné dans le groupe comprenant des agents épaississants à base de polyacrylate, polyuréthane, polyurée, cellulose, en particulier hydroxyéthylcellulose et/ou méthylcellulose, des agents épaississants à base de d'alcool polyvinylique, de polyéther polyol, et des mélanges quelconques de ceux-ci et/ou **en ce que** l'agent de matité est sélectionné dans le groupe comprenant de l'acide silicique, en particulier de la silice de précipitation, sel d'aluminium sodique, des terres de diatomées, un kaolin et des mélanges quelconques de ceux-ci et/ou **en ce que** l'agent d'hydrophobisation est sélectionné dans le groupe comprenant des alkylakoxysilanes, des alkylalkoxysiloxanes, des alkysiliconates solubles dans l'eau, monoalkyle-silanetriol, dialkyle-silanediol, trialkyle-silanol, les sels alcalins de monoalkyle-silanetriol, dialkyle-silandiol et trialkyle-silanol, et des mélanges quelconques de ceux-ci, et est en particulier un siliconate de méthyle de potassium, un silanetriolate de méthyle de potassium et/ou un silanetriolate d'éthyle de potassium.

9. Masse de revêtement selon l'une des revendications précédentes, contenant
1 à 45 % en poids, avantageusement 2 à 35 % en poids et préférentiellement 5 à 30 % en poids de liant organique polymère (fraction solide) et/ou
0,05 à 15 % en poids, avantageusement 0,1 à 12 % en poids et préférentiellement 0,5 à 8 % en poids de silicate (fraction solide) et/ou
0,001 à 4 % en poids, avantageusement 0,005 à 3 % en poids et préférentiellement 0,01 à 2 % en poids de stabilisateur (fraction solide) et/ou
0,01 à 5 % en poids, avantageusement 0,05 à 4 % en poids et préférentiellement 0,1 à 2 % en poids d'agent dispersant (fraction solide) et/ou
0,05 à 10 % en poids, avantageusement 0,01 à 5 % en poids et préférentiellement 0,1 à 3 % en poids d'additifs (fraction solide) et/ou
0,05 à 20 % en poids, avantageusement 0,1 à 15 % en poids et préférentiellement 0,4 à 12 % en poids an agent de matité (fraction solide), et/ou
0,001 à 2,0 % en poids, avantageusement 0,01 à 1,0 % en poids et préférentiellement 0,1 à 0,5 % en poids agent d'hydrophobisation (fraction solide), en particulier siliconate de méthyle de potassium et/ou silanetriolate de méthyle de potassium, et/ou
0,01 à 3,0 % en poids, avantageusement 0,03 à 2,0 % en poids, préférentiellement 0,1 à 1,5 % en poids et en particulier 0,3 à 1,0 % en poids de cire (fraction solide), et/ou 10 à 90 % en poids, avantageusement 35 à 85 % en poids et préférentiellement 55 à 80 % en poids d'eau,
respectivement par rapport au poids total du de la masse de revêtement,
les composants formant la masse de revêtement donnant toujours 100 % en poids.

10. Masse de revêtement selon l'une des revendications précédentes, contenant des agents de matité, des agents de charge et des pigments dans une teneur totale non supérieure à 20 % en poids, avantageusement non supérieure à 15 % en poids et préférentiellement non supérieure à 10 % en poids, par rapport au poids total du de la masse de revêtement.

11. Masse de revêtement selon l'une des revendications précédentes, **caractérisée en ce que**
l'agent dispersant comprend au moins un agent dispersant polyanionique, en particulier sélectionné dans le groupe comprenant des polycarboxylates, en particulier des sels d'acides polyacryliques, des polyphosphates, en particulier des polyphosphates linéaires et/ou des métaphosphates cycliques, et des mélanges quelconques de ceux-ci, préférentiellement des sels d'acides polyacryliques.

12. Système de revêtement, en particulier système de revêtement en vernis, contenant, ou consistant en
au moins une masse de revêtement selon l'une des revendications précédentes et au moins une pâte aqueuse colorée.

13. Revêtement, en particulier revêtement en vernis, obtenu ou pouvant être obtenu à partir d'une masse de revêtement selon l'une des revendications 1 à 11 ou à partir d'un système de revêtement selon la revendication 12.

14. Substrat comprenant une surface à revêtir et un revêtement selon la revendication 13 sur ladite surface à revêtir.

15. Kit pour un système de revêtement, en particulier selon la revendication 12, comprenant au moins une masse de revêtement selon l'une des revendications 1 à 11 et au moins pâte aqueuse colorée.

16. Utilisation de la masse de revêtement selon l'une des revendications 1 à 11 ou du système de revêtement selon la revendication 12 ou du kit selon la revendication 15 pour le revêtement, en particulier par vernis, de surfaces de substrat, préférentiellement dans des locaux intérieurs.
